# EUROPÄISCHE PATENTANMELDUNG

(11) **EP 3 213 887 A1**
(43) Veröffentlichungstag der Anmeldung: **06.09.2017**
(21) Anmeldenummer: 16158160.8
(22) Anmeldetag: 02.03.2016
(51) Int. Cl.: B25J 17/02, B25J 15/02

(54) **AUFNAHMEVORRICHTUNG ZUM AUFNEHMEN EINES WERKSTÜCKS, VERWENDUNG EINER SOLCHEN AUFNAHMEVORRICHTUNG UND MASCHINE ODER ANLAGE MIT EINER SOLCHEN AUFNAHMEVORRICHTUNG**

(71) Anmelder: Klingelnberg AG, 8050 Zürich (CH)
(72) Erfinder: Brieden, Christian, 42499 Hückeswagen (DE); Lamsfuß, Harald, 51688 Wipperfürth (DE)
(74) Vertreter: Heusch, Christian

(57) **Zusammenfassung**

Aufnahmevorrichtung (100) zum Aufnehmen eines Werkstücks (10), die eine Parallelogrammanordnung (110) und eine Werkstückaufnahme (120) aufweist. Die Parallelogrammanordnung (110) umfasst:
- einen oberen Träger (111), der eine erste Fläche aufspannt,
- einen mittleren Träger, der eine zweite Fläche aufspannt,
- einen unteren Träger, der eine dritte Fläche aufspannt,
- mindestens eine erste Blattfeder (114.1) und eine zweite Blattfeder (114.2),
- mindestens eine dritte Blattfeder und eine vierte Blattfeder (115.2), wobei
- die Flächen parallel zueinander verlaufen,
- die drei Träger (111) voneinander beabstandet angeordnet sind,
- der obere Träger (111) zusammen mit dem mittleren Träger und der ersten Blattfeder (114.1) sowie der zweiten Blattfeder (114.2) eine erste Parallelogrammkonfiguration bilden, und
- der mittlere Träger zusammen mit dem unteren Träger und der dritten Blattfeder sowie der vierten Blattfeder (115.2) eine zweite Parallelogrammkonfiguration bilden.

## Beschreibung

Die vorliegende Erfindung betrifft eine Aufnahmevorrichtung zum Aufnehmen eines Werkstücks, die Verwendung einer solchen Aufnahmevorrichtung und eine Maschine oder Anlage mit einer solchen Aufnahmevorrichtung.

Es kommen in vielen industriellen Bereichen Maschinen und Anlagen zum Einsatz, die mit Werkstücken beschickt werden müssen. Früher wurden Werkstücke meist von einem Mitarbeiter aus angelieferten und bevorrateten Werkstückgebinden entnommen und z.B. an eine Bearbeitungsmaschine übergeben, die einen Bearbeitungs- oder Handhabungsschritt an dem Werkstück ausführt und das bearbeitete Werkstück danach wieder abgibt.

In vielen Bereichen ist dieser Arbeitsvorgang der Überführung und Rücküberführung des Werkstücks heute mittels eines Roboters automatisiert. Derartige Roboter sind teuer und kompliziert in der Handhabung.

Es gibt daher eine ganze Reihe von Maschinen und Anlagen, bei denen ein teil-automatisierter oder voll-automatisierter Belader zum Einsatz kommt. Dabei können die Werkstücke z.B. mittels eines Förderbandes zugeführt werden. Von dort werden sie z.B. von einem Greifer oder einer anderen Aufnahmevorrichtung aufgenommen und in eine andere Position bewegt. In dieser anderen Position kann der Greifer das Werkstück z.B. an ein Spannfutter übergeben, wo es dann eingefuttert wird.

Der apparative und sensortechnische Aufwand ist recht groß, um die erforderlichen Bewegungen schnell und mit hoher Präzision ausführen zu können und um ein präzises Einspannen der Werkstücke zu ermöglichen. Dies gilt vor allem bei schweren Werkstücken, wie z.B. Zahnrad-Werkstücken.

Es geht bei der Erfindung um einen Ansatz, der eine automatisierte, hochgenaue Handhabung von Werkstücken ermöglicht. Unter anderem geht es um das hochgenaue Übergeben eines Werkstücks an eine Maschine oder Anlage. Speziell geht es um das hochgenaue Einspannen der Werkstücke in einem Spannfutter oder das hochgenaue Übergeben eines Werkstücks an eine Werkstückeachse, die z.B. mit einem Drehteller ausgestattet ist.

Die Aufgabe wird gelöst durch eine Aufnahmevorrichtung nach Anspruch 1, durch eine Verwendung einer solchen Aufnahmevorrichtung nach Anspruch 12 und durch eine Maschine oder Anlage nach Anspruch 14.

Gemäß Erfindung wird eine Aufnahmevorrichtung zum Aufnehmen eines Werkstücks bereit gestellt, die eine Parallelogrammanordnung und eine Werkstückaufnahme aufweist. Die Parallelogrammanordnung der Erfindung zeichnet sich dadurch aus, dass sie umfasst:
- einen oberen Träger, der eine erste Fläche aufspannt,
- einen mittleren Träger, der eine zweite Fläche aufspannt,
- einen unteren Träger, der eine dritte Fläche aufspannt,
- mindestens eine erste Blattfeder und eine zweite Blattfeder,
- mindestens eine dritte Blattfeder und eine vierte Blattfeder,
wobei
- die drei Flächen parallel zueinander verlaufen,
- die drei Träger voneinander beabstandet angeordnet sind,
- der obere Träger zusammen mit dem mittleren Träger und der ersten sowie der zweiten Blattfeder eine erste Parallelogrammkonfiguration bilden, und
- der mittlere Träger zusammen mit dem unteren Träger und der dritten sowie der vierten Blattfeder eine zweite Parallelogrammkonfiguration bilden.

Diese beiden Parallelogrammkonfigurationen sind bei allen Ausführungsformen um 90 Grad (bezogen auf einer Vertikalachse) zueinander verdreht, wobei die erste Parallelogrammkonfiguration Bewegungen nur in Richtung einer x-Achse und die zweite Parallelogrammkonfiguration Bewegungen nur in Richtung einer y-Achse zulassen, wobei die x- und y-Achsen orthogonal zueinander stehen.

Jede der beiden Parallelogrammkonfigurationen umfasst bei allen Ausführungsformen paarweise angeordnete Blattfedern. Dabei bilden die erste Blattfeder und die zweite Blattfeder ein Blattfederpaar und es bilden die dritte Blattfeder und die vierte Blattfeder ein Blattfederpaar.

Durch die erfindungsgemässe Anordnung sind bei der ersten Parallelogrammkonfiguration Bewegungen nur in Richtung einer x-Achse und keine Bewegungen in Richtung einer y-Achse oder einer z-Achse möglich. Auch sind bei der ersten Parallelogrammkonfiguration keine Torsionsbewegungen um eine z-Achse möglich. Bei der zweiten Parallelogrammkonfiguration sind Bewegungen nur in Richtung einer y-Achse und keine Bewegungen in Richtung einer x-Achse oder einer z-Achse möglich. Auch sind bei der zweiten Parallelogrammkonfiguration keine Torsionsbewegungen um die z-Achse möglich.

Vorzugsweise sind die beiden Parallelogrammkonfigurationen bei allen Ausführungsformen so ausgelegt, dass
- bei der oberen Parallelogrammkonfiguration die Blattfedern in x-Richtung biegeweich und in y- sowie z-Richtung biegesteif sind, und
   bei der unteren Parallelogrammkonfiguration die Blattfedern in y-Richtung biegeweich und in x- sowie z-Richtung biegesteif sind.

Wenn die Aufnahmevorrichtung der Erfindung zum Aufnehmen und/oder Abgeben von Werkstücken eingesetzt wird, dann sind aufgrund des Zusammenwirkens der beiden Parallelogrammkonfigurationen kleine Ausgleichbewegungen parallel zur x-Achse und zur y-Achse möglich, wobei jedoch das Werkstück gleichzeitig in einer horizontalen Position (d.h. in der x-y-Ebene) gehalten wird.

Dieser Ansatz funktioniert auch dann, wenn die Aufnahmevorrichtung der Erfindung schnell von einer ersten Position (z.B. eine Aufnahmeposition im Bereich eines Förderbandes) in eine zweite Position (z.B. eine Einspann- oder Abgabeposition im Bereich einer Maschine oder Anlage) bewegt wird.

Vorzugsweise ist die Aufnahmevorrichtung mit einer Sperrvorrichtung versehen, die einerseits dazu dient die Parallelogrammkonfigurationen vor zu grossen Beschleunigungseinflüssen zu schützen und die andererseits im gesperrten Zustand das Überschwingen nach dem stoppen einer Bewegung zu verhindern.

Gemäß Erfindung kann die Aufnahmevorrichtung besonders vorteilhaft im Umfeld einer (Bearbeitungs-)Maschine oder einer Mess- oder Testanlage eingesetzt werden.

Die Erfindung lässt sich vorzugsweise beim automatisierten Einspannen oder Einfuttern von Bauteilen verwenden, da die Parallelogrammanordnung kleine Ausgleichsbewegungen erlaubt. Ohne den Einsatz der Parallelogrammanordnung müsste man entweder hochgenau und zeitaufwendig positionieren oder man müsste einen gewissen Verschleiss der Spannvorrichtung (des Spannfutters) hinnehmen.

Es ist ein weiterer Vorteil der Erfindung, dass sie ohne Verschleissteile auskommt.

Vorzugsweise wird die vorliegende Erfindung auf die Fertigung von Zahnrädern und/oder Getriebeteilen angewendet. In diesem Fall kann die Aufnahmevorrichtung der Erfindung als Belader einer Verzahnungsmaschine, einer Verzahnungsmessanlage oder einer Verzahnungstestanlage dienen.

### ZEICHNUNGEN

Weitere Einzelheiten und Vorteile der Erfindung werden im Folgenden anhand von Ausführungsbeispielen und mit Bezug auf die Zeichnung beschrieben.
- Fig. 1A: zeigt schematisch eine Draufsicht einer ersten Ausführungsform der Aufnahmevorrichtung der Erfindung;
- Fig. 1B: zeigt schematisch eine Seitenansicht der Aufnahmevorrichtung der Fig. 1A;
- Fig. 1C: zeigt schematisch eine Perspektivansicht der Aufnahmevorrichtung der Fig. 1A, wobei seitlich ein Bereich transparent dargestellt ist;
- Fig. 1D: zeigt schematisch drei Träger der Aufnahmevorrichtung der Fig. 1A, in einer Explosionsdarstellung;
- Fig. 2A: zeigt schematisch eine Draufsicht einer zweiten Ausführungsform der Aufnahmevorrichtung der Erfindung;
- Fig. 2B: zeigt schematisch eine Seitenansicht der Aufnahmevorrichtung der Fig. 2A;
- Fig. 2C: zeigt schematisch eine Perspektivansicht der Aufnahmevorrichtung der Fig. 2A, wobei seitlich ein Bereich transparent dargestellt ist;
- Fig. 2D: zeigt schematisch eine Vorderansicht eines Teils der Aufnahmevorrichtung der Fig. 2A, wobei die Blattfedern nicht gezeigt sind;
- Fig. 2E: zeigt schematisch die drei Träger und die Sperrvorrichtung der Aufnahmevorrichtung der Fig. 2A, in einer Explosionsdarstellung;
- Fig. 2F: zeigt schematisch den unteren Träger in einer perspektivischen Ansicht;
- Fig. 2G: zeigt schematisch die drei Träger und die Sperrvorrichtung der Aufnahmevorrichtung der Fig. 2A, in einer perspektivischen Explosionsdarstellung;
- Fig. 2H: zeigt einen Schnitt der drei Träger und der Sperrvorrichtung der Aufnahmevorrichtung der Fig. 2A;
- Fig. 3: zeigt eine stark schematisiert Ansicht einer Ausführungsform, bei der eine Aufnahmevorrichtung der Erfindung als Belader für eine Maschine oder Anlage dient.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

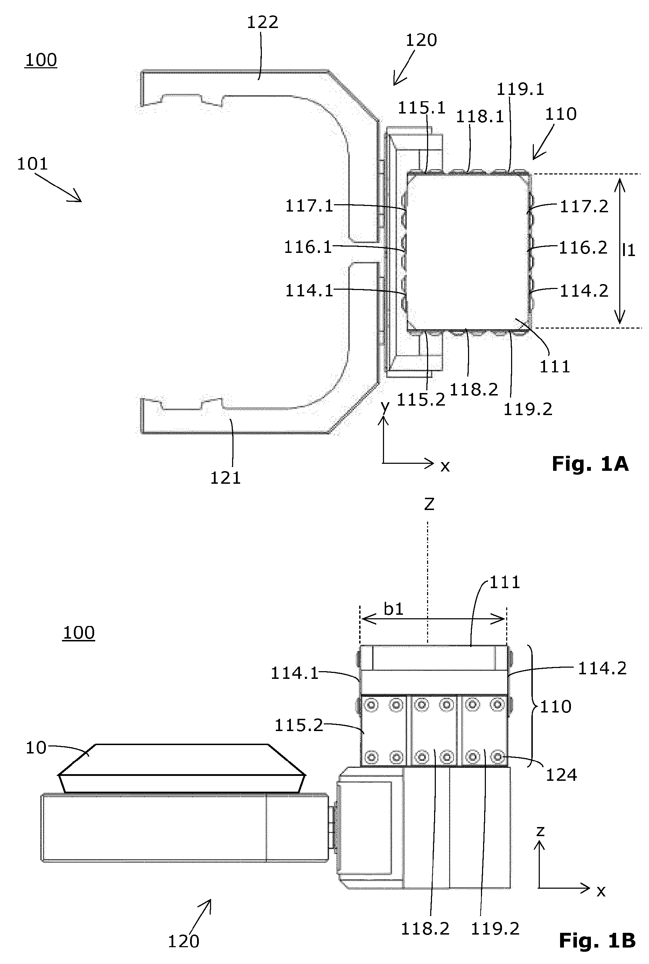

Anhand der Figuren 1A - 1D wird im Folgenden eine erste Ausführungsform beschrieben. Es geht um eine Aufnahmevorrichtung 100, die speziell zum Aufnehmen eines Werkstücks 10 ausgelegt ist. In Fig. 1B ist in einer Seitenansicht in beispielhaftes Werkstück 10 (hier ein Kegelrad-Werkstück) gezeigt.

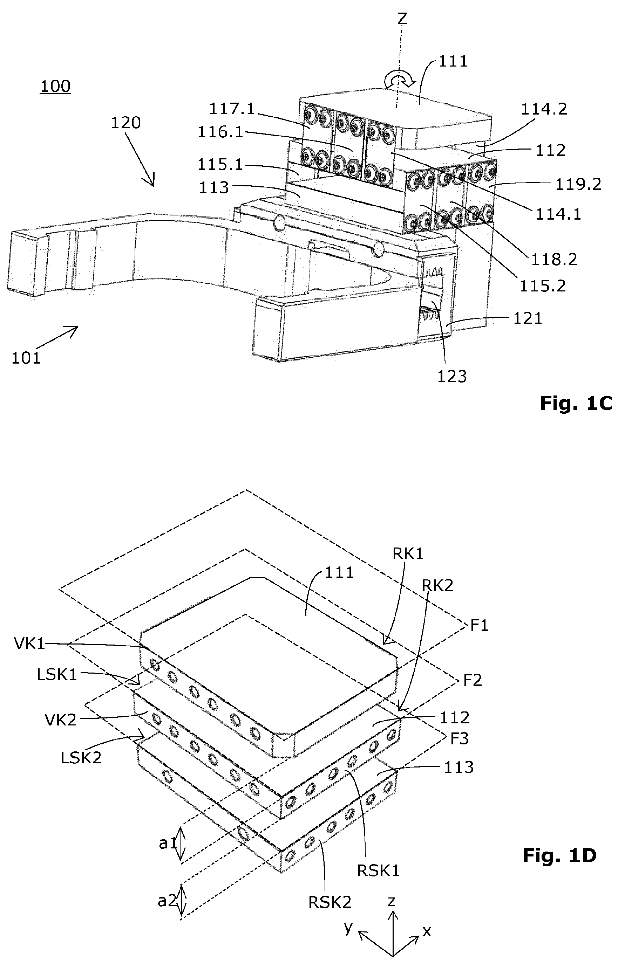

Die Aufnahmevorrichtung 100 umfasst eine Parallelogrammanordnung 110 und eine Werkstückaufnahme 120. Die Parallelogrammanordnung 110 umfasst:
- einen oberen Träger 111, der eine erste Fläche F1 aufspannt (siehe Fig. 1D),
- einen mittleren Träger 112, der eine zweite Fläche F2 aufspannt (siehe Fig. 1D),
- einen unteren Träger 113, der eine dritte Fläche F3 aufspannt (siehe Fig. 1D).

Weiterhin umfasst die Parallelogrammanordnung 110 mindestens eine erste Blattfeder 114.1 und eine zweite Blattfeder 114.2 (zusammen auch als Blattfederpaar bezeichnet) sowie mindestens eine dritte Blattfeder 115.1 und eine vierte Blattfeder 115.2 (zusammen auch als Blattfederpaar bezeichnet).

Die drei Träger 111, 112, 113 sind stets so angeordnet, dass die Flächen F1, F2, F3 parallel zueinander verlaufen (d.h. die drei Träger 111, 112, 113 liegen flächenparallel zueinander). Außerdem sind die drei Träger 111, 112, 113 voneinander beabstandet angeordnet, wie man z.B. in Fig. 1D erkennen kann.

Der lichte Abstand a1 zwischen dem oberen Träger 111 und dem mittleren Träger 112 kann sich bei allen Ausführungsformen von dem lichten Abstand a2 zwischen dem mittleren Träger 112 und dem unteren Träger 113 unterscheiden. Die beiden lichten Abstände a1 und a2 sind in Fig. 1D zu erkennen.

Gemäß Erfindung bildet der obere Träger 111 zusammen mit dem mittleren Träger 112 und der ersten Blattfeder 114.1 sowie der zweiten Blattfeder 114.2 eine erste Parallelogrammkonfiguration. Gemäß Erfindung bildet der mittlere Träger 112 zusammen mit dem unteren Träger 113 und der dritten Blattfeder 115.1 sowie der vierten Blattfeder 115.2 eine zweite Parallelogrammkonfiguration.

Als Träger 111, 112, 113 können bei allen Ausführungsformen Platten, Blöcke oder Rahmenkonstruktionen dienen. Die Träger 111, 112, 113 müssen in sich starr sein und sie müssen Bereiche (z.B. Längs- und Querkanten) zum Befestigen der Blattfedern aufweisen.

Die Träger 111, 112, 113 können bei allen Ausführungsformen einstückig oder mehrteilig ausgeführt sein.

Vorzugsweise kommen bei allen Ausführungsformen Träger 111, 112, 113 mit rechteckförmigem oder viereckigem Grundriss (in der x-y-Ebene betrachtet) zum Einsatz, wie in den Figuren gezeigt.

Vorzugsweise kommen bei allen Ausführungsformen Träger 111, 112, 113 zum Einsatz, die einen rechteckförmigen Querschnitt in der y-z-Ebene und in der x-z-Ebene aufweisen.

Vorzugsweise kommen bei allen Ausführungsformen Träger 111, 112 zum Einsatz, die vordere Längskanten VK1, VK2 und hintere Längskanten (Rückkanten genannt) RK1, RK2 mit rechteckiger Flächenform haben, wobei diese Längskanten VK1, VK2, RK1, RK2 parallel zur y-z-Ebene liegen.

Vorzugsweise kommen bei allen Ausführungsformen Träger 112, 113 zum Einsatz, die linke Seitenkanten LSK1, LSK2 und rechte Seitenkanten RSK1, RSK2 mit rechteckiger Flächenform haben, wobei diese Seitenkanten LSK1, LSK2, RSK1, RSK2 parallel zur x-z-Ebene liegen.

Vorzugsweise haben die Träger 111, 112 bei allen Ausführungsformen die gleiche Breite b1 (parallel zur x-Achse gemessen, wie in Fig. 1B gezeigt), damit die Blattfedern 114.1, 116.1, 117.1 in einer ersten Vertikalebene parallel zur y-z-Ebene und die Blattfedern 114.2, 116.2, 117.2 in einer zweiten Vertikalebene parallel zur y-z-Ebene liegen.

Vorzugsweise haben die Träger 112, 113 bei allen Ausführungsformen die gleiche Länge l1 (parallel zur y-Achse gemessen, wie in Fig. 1A gezeigt), damit die Blattfedern 115.1, 118.1, 119.1 in einer dritten Vertikalebene parallel zur x-z-Ebene und die Blattfedern 115.2, 118.2, 119.2 in einer vierten Vertikalebene parallel zur x-z-Ebene liegen.

Wie in den Figuren gezeigt, kann die Aufnahmevorrichtung 100 beispielsweise drei Blattfederpaare 114.1, 114.2; 116.1, 116.2; 117.1, 117.2 umfassen, die den mittleren Träger 112 mit dem oberen Träger 111 verbinden.

Wie in den Figuren gezeigt, kann die Aufnahmevorrichtung 100 beispielsweise drei Blattfederpaare 115.1, 115.2; 118.1, 118.2; 119.1, 119.2 umfassen, die den unteren Träger 113 mit dem mittleren Träger 112 verbinden.

Die Aufnahmevorrichtung 100 der Erfindung kann bei allen Ausführungsformen aber pro Ebene auch nur je ein Blattfederpaar umfassen.

Die Aufnahmevorrichtung 100 der Erfindung kann bei allen Ausführungsformen mindestens vier obere Blattfedern zum Verbinden des oberen Trägers 111 mit dem mittleren Träger 112 und/oder mindestens vier untere Blattfedern zum Verbinden des mittleren Trägers 112 mit dem unteren Träger 113 umfassen.

Wichtig ist, dass die Blattfederpaare jeweils die gleiche Federkonstante haben. Die Blattfederpaare 114.1, 114.2; 116.1, 116.2; 117.1, 117.2 können jedoch bei allen Ausführungsformen eine andere Federkonstante haben als die Blattfederpaare 115.1, 115.2; 118.1, 118.2; 119.1, 119.2.

Vorzugsweise kommen bei allen Ausführungsformen Blattfedern oder Feder(band)stahl zum Einsatz. Die Blattfedern, die im Rahmen der Erfindung zum Einsatz kommen, sind vorzugsweise so ausgelegt, dass sie ohne bleibende Verformung elastisch in den Ausgangszustand zurückkehren.

Es können bei allen Ausführungsformen auch zwei oder mehr als zwei Blattfedern zu Federpaketen zusammengefügt sein.

Es können bei allen Ausführungsformen auch eingesetzt werden, die aus zu Tafeln verleimten metallischen Einzelfolien oder Einzelblättern bestehen.

Vorzugsweise sind die Blattfedern bei allen Ausführungsformen mit zwei oder vier Schrauben oder Nieten an den Trägern 111, 112, 113 befestigt. In Fig. 1B sind z.B. die Schraubenköpfe von zwölf Schrauben 124 zu erkennen, die allesamt in einer Ebene parallel zur x-z-Ebene liegen. Jeder der Blattfedern ist hier in diesem Ausführungsbeispiel mit je vier Schrauben 124 befestigt. Die Befestigung kann bei allen Ausführungsformen aber auch anders gestaltet sein.

Vorzugsweise zeichnet sich die erste Parallelogrammkonfiguration bei allen Ausführungsformen dadurch aus, dass die erste Blattfeder 114.1 parallel verlaufende Vorderkanten VK2, VK1 des mittleren Trägers 112 und des oberen Trägers 111 verbindet und die zweite Blattfeder 114.2 parallel verlaufende Rückkanten RK2, RK1 des mittleren Trägers 112 und des oberen Trägers 111 verbindet

Vorzugsweise zeichnet sich die zweite Parallelogrammkonfiguration bei allen Ausführungsformen dadurch aus, dass die dritte Blattfeder 115.1 parallel verlaufende linke Seitenkanten LSK1, LSK2 des mittleren Trägers 112 und des unteren Trägers 113 verbindet und die vierte Blattfeder 115.2 parallel verlaufende rechte Seitenkanten RSK1, RSK2 des mittleren Trägers 112 und des unteren Trägers 113 verbindet.

Bei allen Ausführungsformen der ersten Parallelogrammkonfiguration können die erste Blattfeder 114.1 und die zweite Blattfeder 114.2 den mittleren Träger 112 mit dem oberen Träger 111 verbinden, wobei die erste Blattfeder 114.1 im Bereich der ersten Längsseite VK1 des oberen Trägers 111 und einer ersten Längsseite VK2 des mittleren Trägers 112, die zweite Blattfeder 114.2 im Bereich einer zweiten Längsseite RK1 des oberen Trägers 111 und einer zweiten Längsseite RK2 des mittleren Trägers 112 angeordnet sind, und die erste Blattfeder 114.1 und die zweite Blattfeder 114.2 flächenparallel (parallel zur y-z-Ebene) zueinander verlaufen.

Bei allen Ausführungsformen der zweiten Parallelogrammkonfiguration können die dritte Blattfeder 115.1 und die vierte Blattfeder 115.2 den unteren Träger 113 mit dem mittleren Träger 112 verbinden, wobei die dritte Blattfeder 115.1 im Bereich einer ersten Querseite LSK1 des mittleren Trägers 112 und einer ersten Querseite LSK2 des unteren Trägers 113, die vierte Blattfeder 115.2 im Bereich einer zweiten Querseite RSK1 des mittleren Trägers 112 und einer zweiten Querseite RSK2 des unteren Trägers 113 angeordnet sind, und die dritte Blattfeder 115.1 und die vierte Blattfeder 115.2 flächenparallel (parallel zur x-z-Ebene) zueinander verlaufen.

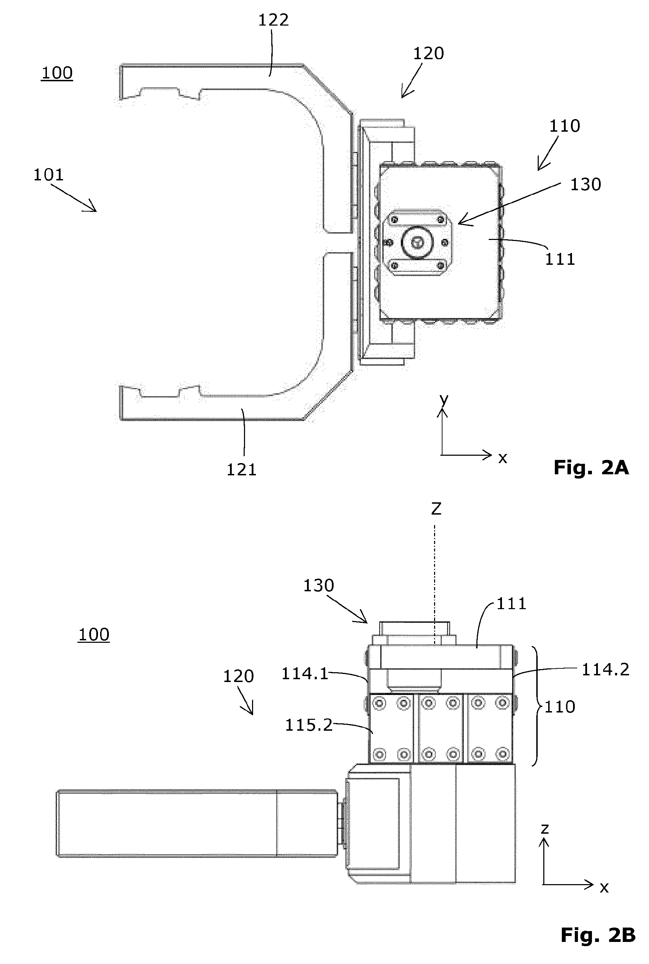

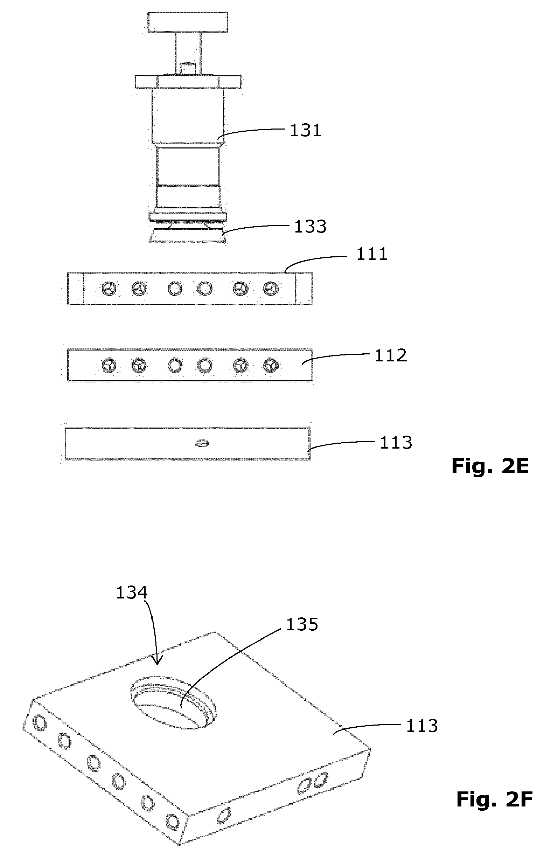

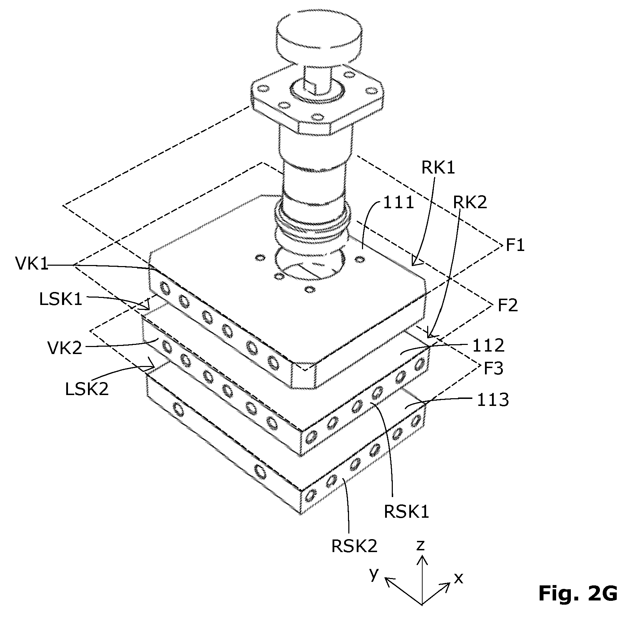

Anhand der Figuren 2A - 2H wird im Folgenden eine zweite Ausführungsform beschrieben. Diese zweite Ausführungsform baut auf der ersten Ausführungsform auf. Daher werden dieselben Bezugszeichen verwendet und es wird auf die Beschreibung der Figuren 1A - 1D verwiesen. Im Folgenden wird primär auf die Unterschiede der zweiten Ausführungsform gegenüber der ersten Ausführungsform eingegangen. Um die Figuren 2A - 2C nicht zu überfrachten, wurden nicht alle Blattfedern mit Bezugszeichen versehen.

Die zweite Ausführungsform zeichnet sich dadurch aus, dass sie eine Sperrvorrichtung 130 umfasst, um die erste Parallelogrammkonfiguration bei Bedarf starr mit der zweiten Parallelogrammkonfiguration verbinden zu können.

Eine solche Sperrvorrichtung 130 wird vorzugsweise bei allen Ausführungsformen eingesetzt, um bei schnellen Bewegungen (d.h. bei grossen Beschleunigungen) Probleme mit dem Überschwingen zu vermeiden. D.h. eine Ausführungsform, die mit einer Sperrvorrichtung 130 ausgestattet ist, kann im gesperrten Zustand schnell von einer Stellung oder Position in eine andere Stellung oder Position bewegt werden, ohne dass die Parallelogrammkonfiguration zu Schaden kommt und ohne dass man nach dem Stoppen der Bewegung abwarten muss, bis das Überschwingen abgeklungen ist. Sobald die Bewegung gestoppt wurde, kann die Sperrvorrichtung 130 entsperrt werden und die Aufnahmevorrichtung 100 zeigt wieder ihr elastisches Verhalten.

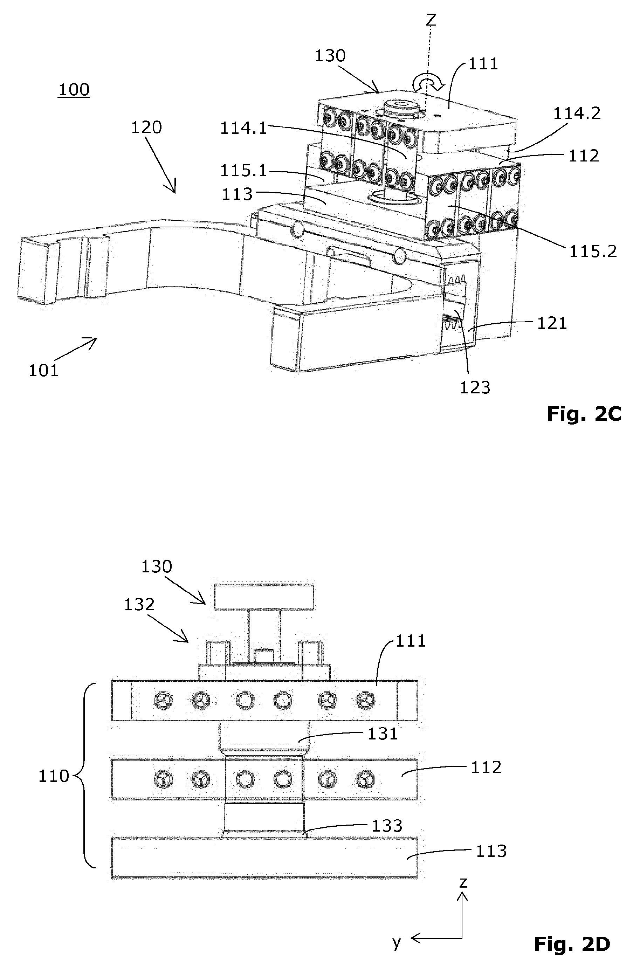

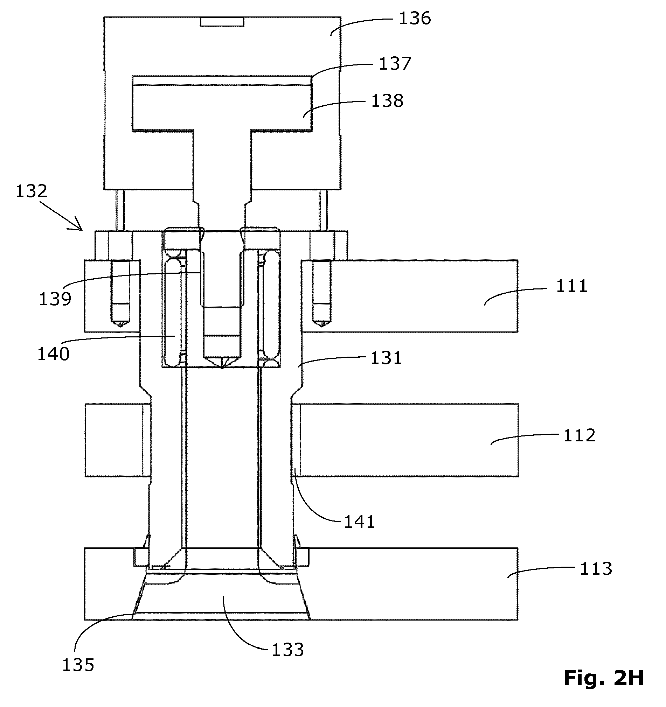

Die Sperrvorrichtung 130 kann bei allen Ausführungsformen einen Bolzen 131 umfassen, der parallel zur z-Achse beweglich gelagert ist. Der Bolzen 131 ist vorzugsweise bei allen Ausführungsformen mit dem oberen Träger 111 verbunden, wie z.B. in Fig. 2D im Bereich 132 zu erkennen ist. Der Bolzen 131 erstreckt sich durch eine Durchgangsöffnung 141 des mittleren Trägers 112 hindurch und sitzt im unteren Träger 113 in einem Sackloch oder in einer Durchgangsöffnung 134 (siehe Fig. 2F). Am unteren Ende des Bolzens 131 kann eine äußere Kegelfläche 133 ausgebildet sein, wie in Fig. 2D andeutungsweise und in Fig. 2H genauer zu erkennen ist. Im Sackloch oder in der Durchgangsöffnung 134 des unteren Trägers 113 kann eine komplementäre Kegelfläche 135 ausgebildet sein (siehe Fig. 2F und Fig. 2H). Wenn nun der Bolzen 131 parallel zu z-Achse nach oben bewegt wird, so wird die äußere Kegelfläche 133 des Bolzens 131 in die komplementäre Kegelfläche 135 des Träger 113 gezogen und es ergibt sich eine formschlüssige Verbindung des oberen Trägers 111 mit dem unteren Träger 113.

Die Parallelogrammanordnung befindet sich in diesem Moment in einem gesperrten Zustand. In diesem gesperrten Zustand sind die Blattfedern inaktiv und der untere Träger 113 bewegt sich solidarisch mit dem oberen Träger 111.

Der gesperrte Zustand kann aufgelöst werden, indem der Bolzen 131 parallel zu z-Achse nach unten bewegt wird. In diesem Fall löst sich die äußere Kegelfläche 133 des Bolzens 131 von der komplementären Kegelfläche 135 und die formschlüssige Verbindung wird aufgehoben. In diesem Zustand, der auch als entsperrter Zustand bezeichnet wird, kann die Parallelogrammanordnung ihre erfindungsgemässe Lagestabilisierung zeigen.

Fig. 2H zeigt einen Schnitt der drei Träger 111, 112, 113 und der Sperrvorrichtung 31 der Aufnahmevorrichtung 100 der Fig. 2A. Die Sperrvorrichtung 31 hat bei dem beispielhaft gezeigten Aufbau die folgende Konfiguration (von oben nach unten betrachtet):
- ein Druckgehäuse 136 mit Zylinderbohrung 137;
- einen Kolben 138, der mit einem Gewindeloch 139 des Bolzens 131 verschraubt ist;
- Der Bolzen 131 ist von einer Schraubenfeder 140 umgeben, die so angeordnet ist, dass sie die Kegelfläche 133 des Bolzens 131 in die Kegelfläche 135 zieht.

Wenn die Zylinderbohrung 137 nun unter Druck gesetzt wird (z.B. durch das Einleiten eines Hydrauliköls), dann werden der Kolben 138 und mit ihm auch Bolzen 131 nach unten gedrückt. Die Kegelfläche 133 des Bolzens 131 löst sich von der Kegelfläche 135 und die Parallelogrammanordnung ist entsperrt.

Es geht um eine Aufnahmevorrichtung 100, die speziell zum Aufnehmen eines Werkstücks 10 ausgelegt ist. In Fig. 1B ist daher in einer Seitenansicht in beispielhaftes Werkstück 10 (hier ein Kegelrad-Werkstück) gezeigt. Die Werkstückaufnahme 120 ist daher bei allen Ausführungsformen so ausgelegt, dass sie für das Aufnehmen eines Werkstücks 10 geeignet ist.

Zu diesem Zweck kann die Werkstückaufnahme 120 bei allen Ausführungsformen zwei starre (seitliche) Arme 121, 122 aufweisen, wie in den Figuren 1A und 2A gezeigt. Die Form und Anordnung der beiden Arme 121, 122 sind beispielhaft zu verstehen. Es liegt auf der Hand, dass die Werkstückaufnahme 120 je nach Werkstück 10, das zu bewegen ist, anderes ausgeführt sein kann.

Die Werkstückaufnahme 120 kann bei allen Ausführungsformen zwei Arme aufweisen, die beweglich ausgebildet sind, um zum Beispiel ein Werkstück 10 durch eine lineare Verschiebungsbewegung und/oder durch eine Schwenkbewegung greifen zu können.

Die Werkstückaufnahme 120 kann bei allen Ausführungsformen mechanisch mit dem unteren Träger 113 oder mit dem oberen Träger 111 verbunden sein. In den Figuren sind jeweils Ausführungsformen gezeigt, bei denen die Werkstückaufnahme 120 mechanisch mit dem unteren Träger 113 verbunden ist.

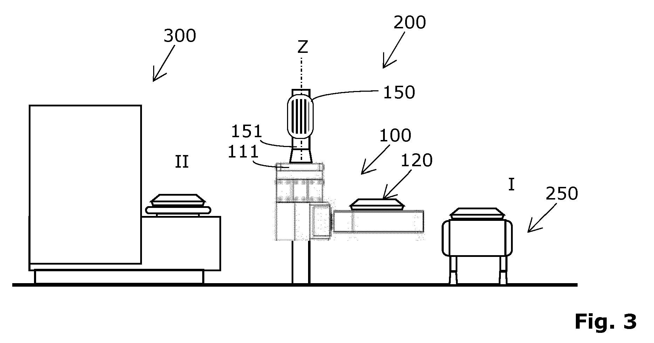

Falls die Aufnahmevorrichtung 100 bewegt werden soll, so kann sie bei allen Ausführungsformen eine Antriebsvorrichtung 150 umfassen, wie beispielhaft in Fig. 3 gezeigt. Es werden im Folgenden zwei Fälle unterschieden.
- falls die Werkstückaufnahme 120 mechanisch mit dem unteren Träger 113 verbunden ist, so setzt die Antriebsvorrichtung 150 an dem oberen Träger 111 an;
- falls die Werkstückaufnahme 120 mechanisch mit dem oberen Träger 113) verbunden ist, so setzt die Antriebsvorrichtung 150 an dem unteren Träger 113 an.

Die Parallelogrammanordnung 110 dient in jedem Fall als Entkopplungselement zwischen demjenigen Träger, der mit der Antriebsvorrichtung 150 verbunden ist und demjenigen Träger, der die Werkstückaufnahme 120 mechanisch trägt.

Die Werkstückaufnahme 120 kann bei allen Ausführungsformen mechanisch mit dem unteren Träger 113 oder mit dem oberen Träger 111 verbunden sein, wie in den Figuren 1C und 2C zu erkennen ist. In diesen beiden Figuren ist im Verbindungsbereich zwischen dem unteren Träger 113 und der Werkstückaufnahme 120 ein Bereich transparent dargestellt. Man kann in diesen beiden Figuren erkennen, dass ein Block 121 unterhalb des unteren Trägers 113 sitzt. Dieser Block 121 kann beispielsweise eine Längsnut 122 aufweisen, die sich parallel zur y-Achse erstreckt. Die beiden Arme 121, 122 können mit ihrem rückwärtigen Bereich in dieser Längsnut 122 sitzen und hier form- und/oder kraftschlüssig verankert sein. Diese Art der Verbindung ist jedoch nur als vorteilhaftes Beispiel zu verstehen.

Die beiden Arme 121, 122 können auch einstückig mit dem unteren Träger 113 realisiert sein.

Fig. 3 zeigt eine stark schematisiert Ansicht einer Ausführungsform, bei der eine Aufnahmevorrichtung 100 der Erfindung als Belader 200 für eine Maschine oder Anlage 300 dient

Eine Antriebsvorrichtung 150 kann, wie in Fig. 3 beispielhaft gezeigt, mit dem oberen Träger 111 der Aufnahmevorrichtung 100 der Erfindung verbunden sein. In diesem Fall hängt die Aufnahmevorrichtung 100 z.B. an einem Rahmen, Ständer oder Portal 151.

Die Parallelogrammanordnung 110 dient in jedem Fall als Entkopplungselement zwischen dem oberen Träger 111, der mit der Antriebsvorrichtung 150 respektive mit dem Rahmen, Ständer oder Portal 151 verbunden ist, und dem unteren Träger 113, der die Werkstückaufnahme 120 mechanisch trägt.

Die Antriebsvorrichtung 150, falls vorhanden, ist dazu auslegt um die Parallelogrammanordnung 110 samt der Werkstückaufnahme 120 von einer ersten Stellung I in eine zweite Stellung II zu überführen. Bei dem Beispiel der Fig. 3 befindet sich die erste Stellung I im Bereich eines Förderbandes 250, das ein Werkstück 10 nach dem anderen (vorzugsweise getaktet) in den Bereich der ersten Stellung I befördert. Hier kann die Aufnahmevorrichtung 100 ein Werkstück 10 aufnehmen, um dann eine kombinierte Schwenkbewegung um die Achse Z und eine Hubbewegung parallel zur Z-Achse auszuführen. Nachdem die Aufnahmevorrichtung 100 eine Schwenkbewegung um 180 Grad durchgeführt hat, kann sie ein Werkstück 10 an eine Maschine oder Anlage 300 übergeben. Diese Übergabe erfolgt im Bereich der Stellung II.

Der Belader der Erfindung kann aber auch so ausgelegt sein, dass die Aufnahmevorrichtung 100 eine Kombination von zwei oder mehr als zwei der folgenden Bewegungen ausführt:
- Schwenkbewegung um die Z-Achse,
- Hubbewegung parallel zur Z-Achse,
- Linearbewegung parallel zur x-Achse,
- Linearbewegung parallel zur y-Achse.

**Bezugszeichen:**

| | |
|---|---|
| Werkstück | 10 |
| | |
| Aufnahmevorrichtung | 100 |
| Aufnahmebereich | 101 |
| | |
| Paralellogrammanordnung | 110 |
| oberer Träger | 111 |
| mittlerer Träger | 112 |
| unterer Träger | 113 |
| erste Blattfeder | 114.1 |
| zweite Blattfeder | 114.2 |
| dritte Blattfeder | 115.1 |
| vierte Blattfeder | 115.2 |
| fünfte Blattfeder | 116.1 |
| sechste Blattfeder | 116.2 |
| siebte Blattfeder | 117.1 |
| achte Blattfeder | 117.2 |
| neunte Blattfeder | 118.1 |
| zehnte Blattfeder | 118.2 |
| elfte Blattfeder | 119.1 |
| zwölfte Blattfeder | 119.2 |
| Werkstückaufnahme | 120 |
| Arme | 121, 122 |
| Block | 123 |
| Schrauben | 124 |
| | |
| Sperrvorrichtung | 130 |
| Bolzen | 131 |
| Bereich | 132 |
| Kegelfläche | 133 |
| Sackloch / Durchgangsöffnung | 134 |
| Kegelfläche | 135 |
| Druckgehäuse | 136 |
| Zylinderbohrung | 137 |
| Kolben | 138 |
| Gewindeloch | 139 |
| Schraubenfeder | 140 |
| Durchgangsöffnung | 141 |
| | |
| Antriebsvorrichtung | 150 |
| Rahmen oder Portal | 151 |
| | |
| Belader | 200 |
| | |
| Förderband | 250 |
| Maschine oder Anlage | 300 |
| | |
| Abstand | a1 |
| Abstand | a2 |
| Breite | b1 |
| erste Fläche | F1 |
| zweite Fläche | F2 |
| dritte Fläche | F3 |
| erste Stellung | I |
| zweite Stellung | II |
| Länge | l1 |
| linke Seitenkanten des mittleren Trägers / erste Querseite | LSK1 |
| linke Seitenkanten des unteren Trägers / erste Querseite | LSK2 |
| | |
| Rückkante des oberen Trägers / | RK1 |
| zweite Längsseite | |
| Rückkante des mittleren Trägers / zweite Längsseite | RK2 |
| rechte Seitenkanten des mittleren Trägers / zweite Querseite | RSK1 |
| rechte Seitenkanten des unteren Trägers / zweite Querseite | RSK2 |
| Vorderkante des oberen Trägers / erste Längsseite | VK1 |
| Vorderkante des mittleren Trägers / erste Längsseite | VK2 |
| Vertikalachse / Schwenkachse | Z |
| Koordinatenachsen | X, y, z |

## Patentansprüche

1. Aufnahmevorrichtung (100) zum Aufnehmen eines Werkstücks (10), die eine Parallelogrammanordnung (110) und eine Werkstückaufnahme (120) aufweist, **dadurch gekennzeichnet, dass** die Parallelogrammanordnung (110) umfasst:
- einen oberen Träger (111), der eine erste Fläche (F1) aufspannt,
- einen mittleren Träger (112), der eine zweite Fläche (F2) aufspannt,
- einen unteren Träger (113), der eine dritte Fläche (F3) aufspannt,
- mindestens eine erste Blattfeder (114.1) und eine zweite Blattfeder (114.2),
- mindestens eine dritte Blattfeder (115.1) und eine vierte Blattfeder (115.2),
wobei
- die Flächen (F1, F2, F3) parallel zueinander verlaufen,
- die drei Träger (111, 112, 113) voneinander beabstandet angeordnet sind,
- der obere Träger (111) zusammen mit dem mittleren Träger (112) und der ersten Blattfeder (114.1) sowie der zweiten Blattfeder (114.2) eine erste Parallelogrammkonfiguration bilden, und
- der mittlere Träger (112) zusammen mit dem unteren Träger (113) und der dritten Blattfeder (115.1) sowie der vierten Blattfeder (115.2) eine zweite Parallelogrammkonfiguration bilden.

2. Aufnahmevorrichtung (100) nach Anspruch 1, **dadurch gekennzeichnet,**
- **dass** bei der ersten Parallelogrammkonfiguration die erste Blattfeder (114.1) parallel verlaufende Vorderkanten (VK2, VK1) des mittleren Trägers (112) und des oberen Trägers (111) verbindet und die zweite Blattfeder (114.2) parallel verlaufende Rückkanten (RK2, RK1) des mittleren Trägers (112) und des oberen Trägers (111) verbindet, und
- **dass** bei der zweiten Parallelogrammkonfiguration die dritte Blattfeder (115.1) parallel verlaufende linke Seitenkanten (LSK1, LSK2) des mittleren Trägers (112) und des unteren Trägers (113) verbindet und die vierte Blattfeder (115.2) parallel verlaufende rechte Seitenkanten (RSK1, RSK2) des mittleren Trägers (112) und des unteren Trägers (113) verbindet.

3. Aufnahmevorrichtung (100) nach Anspruch 1, **dadurch gekennzeichnet, dass**
- bei der ersten Parallelogrammkonfiguration die erste Blattfeder (114.1) und die zweite Blattfeder (114.2) den mittleren Träger (112) mit dem oberen Träger (111) verbinden, wobei die erste Blattfeder (114.1) im Bereich einer ersten Längsseite (VK1) des oberen Trägers (111) und einer ersten Längsseite (VK2) des mittleren Trägers (112), die zweite Blattfeder (114.2) im Bereich einer zweiten Längsseite (RK1) des oberen Trägers (111) und einer zweiten Längsseite (RK2) des mittleren Trägers (112) angeordnet sind, und die erste Blattfeder (114.1) und die zweite Blattfeder (114.2) flächenparallel zueinander verlaufen, und
- dass bei der zweiten Parallelogrammkonfiguration die dritte Blattfeder (115.1) und die vierte Blattfeder (115.2) den unteren Träger (113) mit dem mittleren Träger (112) verbinden, wobei die dritte Blattfeder (115.1) im Bereich einer ersten Querseite (LSK1) des mittleren Trägers (112) und einer ersten Querseite (LSK2) des unteren Trägers (113), die vierte Blattfeder (115.2) im Bereich einer zweiten Querseite (RSK1) des mittleren Trägers (112) und einer zweiten Querseite (RSK2) des unteren Trägers (113) angeordnet sind, und die dritte Blattfeder (115.1) und die vierte Blattfeder (115.2) flächenparallel zueinander verlaufen.

4. Aufnahmevorrichtung (100) nach einem der Ansprüche 1 bis 3, **dadurch gekennzeichnet, dass** sie mindestens vier obere Blattfedern zum Verbinden des oberen Trägers (111) mit dem mittleren Träger (112) und/oder mindestens vier untere Blattfedern zum Verbinden des mittleren Trägers (112) mit dem unteren Träger (113) umfasst.

5. Aufnahmevorrichtung (100) nach Anspruch 4, **dadurch gekennzeichnet, dass** die mindestens vier oberen Blattfedern gleiche Federkonstanten und die mindestens vier unteren Blattfedern gleiche Federkonstanten haben.

6. Aufnahmevorrichtung (100) nach einem der Ansprüche 1 bis 5, **dadurch gekennzeichnet, dass** eine Sperrvorrichtung (130) umfasst, um die erste Parallelogrammkonfiguration starr mit der zweiten Parallelogrammkonfiguration verbinden zu können.

7. Aufnahmevorrichtung (100) nach Anspruch 6, **dadurch gekennzeichnet, dass** die Sperrvorrichtung (130) so ausgelegt ist, dass sie aus einer Sperrposition und eine entsperrte Position überführbar ist.

8. Aufnahmevorrichtung (100) nach einem der Ansprüche 1 bis 6, **dadurch gekennzeichnet, dass** die Werkstückaufnahme (120) mechanisch mit dem unteren Träger (113) oder mit dem oberen Träger (111) verbunden ist und einen Aufnahmebereich (101) zum Aufnehmen des Werkstücks (10) umfasst.

9. Aufnahmevorrichtung (100) nach Anspruch 8, **dadurch gekennzeichnet, dass** sie eine Antriebsvorrichtung (150) umfasst,
- die, falls die Werkstückaufnahme (120) mechanisch mit dem unteren Träger (113) verbunden ist, an dem oberen Träger (111) sitzt, oder
- die, falls die Werkstückaufnahme (120) mechanisch mit dem oberen Träger (113) verbunden ist, an dem unteren Träger (113) sitzt,
um die Parallelogrammanordnung (110) samt der Werkstückaufnahme (120) von einer ersten Stellung (I) in eine zweite Stellung (II) zu überführen.

10. Aufnahmevorrichtung (100) nach einem der Ansprüche 1 bis 8, **dadurch gekennzeichnet, dass** sie eine Antriebsvorrichtung (150) umfasst, die dazu ausgelegt ist die Parallelogrammanordnung (110) samt der Werkstückaufnahme (120) von einer ersten Stellung (I) in eine zweite Stellung (II) zu überführen.

11. Aufnahmevorrichtung (100) nach Anspruch 10, **dadurch gekennzeichnet, dass** die Antriebsvorrichtung (150) eine Schwenkbewegung der Parallelogrammanordnung (110) samt der Werkstückaufnahme (120) um eine Vertikalachse (Z) ermöglicht.

12. Verwendung einer Aufnahmevorrichtung (100) nach einem der Ansprüche 1 bis 11 als Belader (200) für eine Maschine oder Anlage (300), die Zahnrad-Werkstücke (10) bearbeitet oder handhabt, wobei die Aufnahmevorrichtung (100) zur Lagestabilisierung der Zahnrad-Werkstücke (10) dient.

13. Verwendung nach Anspruch 12, **dadurch gekennzeichnet, dass** die Aufnahmevorrichtung (100) eine Sperrvorrichtung (130) umfasst, wobei Sperrvorrichtung (130) die Parallelogrammanordnung (110) in eine Sperrposition überführt, bevor die Aufnahmevorrichtung (100) eine Bewegung ausführt.

14. Maschine oder Anlage (300), die zu Bearbeitung oder Handhabung von Zahnrad-Werkstücken (10) ausgelegt ist, wobei diese eine Aufnahmevorrichtung (100) nach einem der Ansprüche 1 bis 11 umfasst, die als Belader (200) dient.
